# EUROPEAN PATENT SPECIFICATION

(11) **EP 3 621 851 B1**
(45) Date of publication and mention of the grant of the patent: **24.01.2024**
(21) Application number: 18728496.3
(22) Date of filing: 11.05.2018
(51) Int. Cl.: B60R 3/02, E02F 9/08

(54) **A CONSTRUCTION MACHINE HAVING AN ASCENT MEANS**
BAUMASCHINE MIT AUFSTIEGSMITTEL
ENGIN DE CHANTIER COMPRENANT UN MOYEN DE MONTÉE

(30) Priority: 12.05.2017 DE 102017004545
(43) Date of publication of application: 18.03.2020
(73) Proprietor: Caterpillar Inc., Deerfield, IL 60015 (US)
(72) Inventor: HERRNDOBLER, Markus, 92439 Bodenwöhr (DE); FRANK, Fabien, 92263 Ebermannsdorf (DE); Bauer, Bernhard, 92442 Wackersdorf (DE)
(74) Representative: Novagraaf Group
(86) International application number: PCT/US2018/032397
(87) International publication number: WO 2018/209284

(56) References cited:
- EP-A1- 2 481 275
- WO-A1-2017/022336
- GB-A- 2 053 811
- US-B1- 6 264 222
- US-B1- 6 817 433
- US-B2- 7 354 050

## Description

### Technical Field

The present invention relates to a construction machine having an ascent means according to claim 1.

### Background

Construction machines such as excavators, loaders, crawlers, and mixers are often built in such a way that the driver's station cannot readily be reached from a position at ground level. Used for this purpose will be ascent means allowing the driver to reach the driver's station.

Examples of such ascent means may be ladders which are attached to the side of the construction machine and lead directly or via traverses to the driver's station.

US7,354,050 describes according to its abstract a swing-away stair assembly including a pivot bracket assembly for supporting a stair body for pivotal movement on a work machine, such as a landfill compactor.

WO2017022336 A1 discloses a construction machine comprising an upper carriage, an undercarriage and an ascent means, wherein the undercarriage features at least one chassis, which comprises one front pair of wheels and one rear pair of wheels, the upper carriage features a driver's station, and the ascent means comprises a ladder means, which ladder means is able to pivot between a first position, in which the ladder means is arranged between the front pair of wheels and the rear pair of wheels, and a second position, in which the ladder means is attached to the undercarriage closer to the front pair of wheels.

### Summary of the Invention

The object of the invention is to provide an ascent means. This object will be achieved by the construction machine according to claim 1. Further embodiments will be found in the dependent claims included herein.

This object will in particular be achieved by a construction machine comprising an undercarriage and an upper carriage. The upper carriage features a chassis, which comprises one pair of front wheels and one pair of rear wheels. The upper carriage features a driver's station. The ascent means comprises a ladder means attached to the undercarriage, whereby the ladder means is pivotable between a first position, in which the ladder means is arranged between the front pair of wheels and the rear pair of wheels, and a second position, in which the ladder means is attached to the undercarriage laterally adjacent to the front pair of wheels. In this way, the ladder means can in the first position be arranged between the front pair of wheels and the rear pair of wheels. The ladder unit can furthermore feature rungs. When the ladder unit is located in the first position and/or the second position, the rungs can, for example, be oriented at least approximately in the same direction as or parallel to the direction of travel. In addition, the rungs can have the same orientation when the ladder unit is located in an intermediate position between the first position and the second position as they do in the first position and/or the second position. The rungs can thus be oriented in the same direction during the entire pivoting motion.

The first position and/or the second position can be the positions at the limits of the pivoting motion of the ladder unit.

### Brief Description of the Drawings

The invention will be more fully explained in reference to embodiments and with the aid of the drawings. Shown in the drawings are:
Fig.1 a construction machine,
Fig. 2 the ascent means in a first position,
Fig. 3 the ascent means in a position between the first position and a second position,
Fig. 4 the ascent means in the second position,
Fig. 5 another ascent means in a first position,
Fig. 6 the ascent means of Fig. 5 in a position between the first position and the second position,
Fig. 7 the ascent means of Fig. 5 in the second position.

### Detailed Description of the Drawings

The drawings serve to illustrate the embodiments of the invention and are in no way suitable for limiting the scope of protection. The scope of protection is defined by the claims alone.

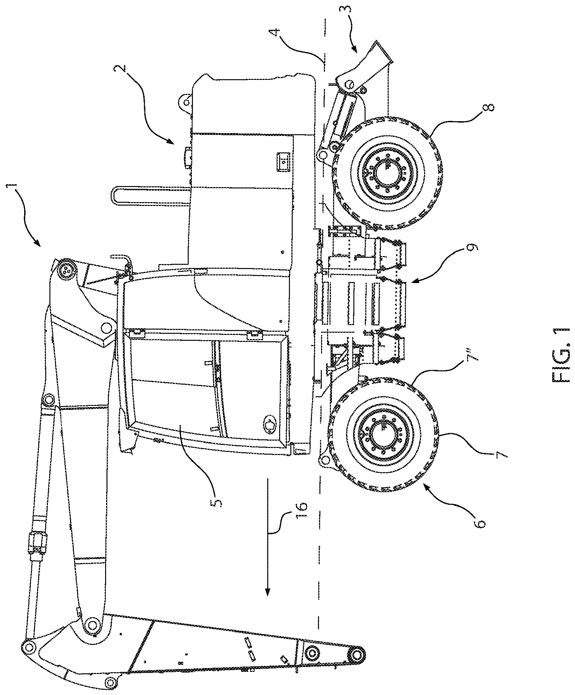

Fig. 1 shows a construction machine 1, in particular a wheel excavator. The construction machine 1 comprises an upper carriage 2 and an undercarriage 3. The upper carriage 2 in this case is mounted atop the undercarriage 3 to be rotatable in a horizontal plane of rotation.

The upper carriage 2 comprises a driver's station 5. In this description and the associated claims, a driver's station 5 is intended to mean a place where the driver must be located in order to drive the construction machine 1. The driver's station 5 can in this case be a driver's cab, a driver's seat, etc.

The undercarriage 3 comprises a chassis 6. The chassis features at least one pair of front wheels 7 and one pair of rear wheels 8. The front pair of wheels features in this case a right front wheel 7' and a left front wheel 7", whereby the right front wheel 7' is arranged, in the direction of travel, laterally to the right of the undercarriage 3, and the left front wheel 7" is arranged, in the direction of travel, laterally to the left of the undercarriage 3. The rear pair of wheels 8 features in this case a right rear wheel 8' and a left rear wheel 8", whereby the right rear wheel 8' is arranged, in the direction of travel, laterally to the right of the undercarriage 3, and the left rear wheel 8" is arranged, in the direction of travel, laterally to the left of the undercarriage 3. The rear pair of wheels 8 is arranged, in the direction of travel, on the undercarriage 3 behind the front pair of wheels 7.

An ascent means 9 is arranged, in the direction of travel, on the left side of the undercarriage 3.

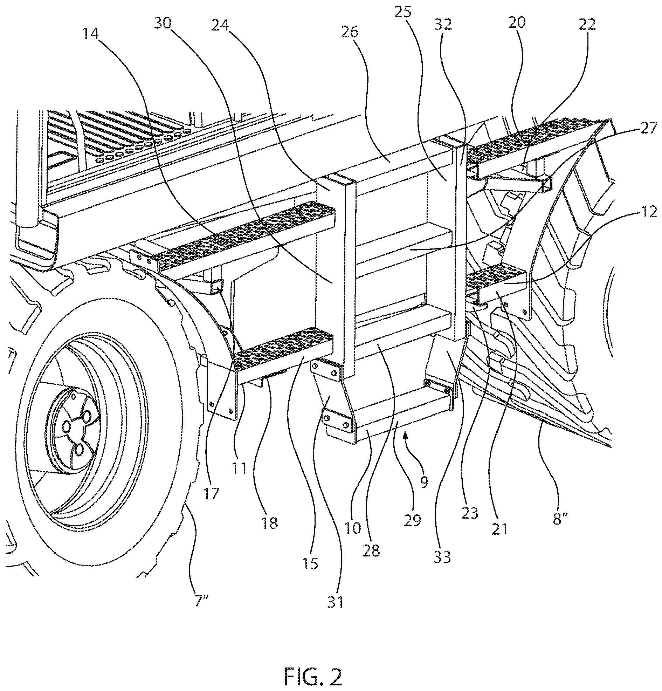

Fig. 2 shows a perspective view of the ascent means 9. In this first position, the ascent means 9 is arranged at least partway between the left front wheel 7" and the left rear wheel 8". The ascent means 9 comprises a ladder means 10 which, in a first position, can be located between a front footboard arrangement 11 and a rear footboard arrangement 12. The front footboard arrangement 11 and the rear footboard arrangement 12 can be arranged along the lateral surface of the undercarriage 3 between the front wheel 7" and the rear wheel 8". The front footboard arrangement 11 can in this case comprise a front vertical strut 13, from which a front, upper footboard 14 can extend, and from which a front, lower footboard 15 can extend opposite to the direction of travel 16. The front, upper footboard 14 and the front, lower footboard 15 can in particular be parallel and extend opposite to the direction of travel 16. The front, upper footboard 14 can be connected to the undercarriage 3 via a first horizontal support strut 17. The front, lower footboard 15 can be connected to the undercarriage 3 via a second horizontal support strut 18. The support struts 17, 18 can in this case be designed to be approximately perpendicular to the direction of travel 16.

The rear footboard arrangement 12 can in particular comprise a rear vertical strut 19, from which a rear, upper footboard 20 can extend, and from which a rear, lower footboard 21 can extend, for example opposite to the direction of travel 16. The rear, upper footboard 20 and the rear, lower footboard 21 can in this case be parallel and extend opposite to the direction of travel 16. The rear, upper footboard 20 can be connected to the undercarriage 3 via a third horizontal support strut 22. The rear, lower footboard 21 can be connected to the undercarriage 3 via a fourth horizontal support strut 23. The support struts 22, 23 are in this case approximately perpendicular to the direction of travel 16 and can be rigidly connected to the undercarriage 3 and the footboard arrangement 12.

The front footboard arrangement 11 and the rear footboard arrangement 12 can be rigidly connected to the undercarriage 3.

The ladder means 10 can feature a left ladder side rail 24 and a right ladder side rail 25, which can be connected to one another by a first, top ladder rung 26, a second ladder rung 27, a third ladder rung 28, and a fourth ladder rung 29. The rungs 26, 27, 28, 29 and the side rails 24 and 25 can in this case lie approximately in a single plane. Ladder means 10 having only one ladder side rail or more than two ladder side rails are also conceivable. Fewer than or more than four rungs are also conceivable. The ladder rungs 26, 27, 28, 29 can in this case be arranged horizontally while the ladder side rails 24, 25 are arranged approximately vertically. The left ladder side rail 24 can in this case feature an upper side rail portion 30, to which a lower side rail portion 31 is attached at an angle. The right ladder side rail 25 can likewise feature an upper side rail portion 32 with a lower side rail portion 33 attached to the upper side rail portion. The upper side rail portion 32 of the right ladder side rail 25 can in this case be parallel to the upper side rail portion 30 of the left ladder side rail 24. The lower side rail portion 33 of the right ladder side rail 25 can arranged at an angle to the upper side rail portion 32 of the right ladder side rail 25 such that a lower end of the lower side rail portion 33 of the right ladder side rail 25 is turned towards a lower end of the lower side rail portion 30 of the left ladder side rail 24. The upper side rail portion 30 of the left ladder side rail 24, the upper side rail portion 32 of the right ladder side rail 25, the lower side rail portion 31 of the left ladder side rail 24, the lower side rail portion 33 of the right ladder side rail 25 can in this case lie in a single plane, which extends through the ladder rungs 26, 27, 28, 29. The lower end of the lower side rail portion 31 of the left ladder side rail 24 and the lower end of the lower side rail portion 33 of the right ladder side rail 25 can be connected via the fourth ladder rung 29.

In this first position, the ladder means 10 can be located behind a surface which is formed between the outer surfaces of the left front wheel 7" and the left rear wheel 8". In particular, the ladder means 10 can in the first position be located behind a surface which is formed by the outer surface of the undercarriage 3 on the side of the undercarriage 3 where the ladder means 10 is arranged.

The first position can in this case be the position into which the ladder means 10 is pivoted.

The rear of the ladder means 10 can in this position fit against the back of one or both footboard arrangements.

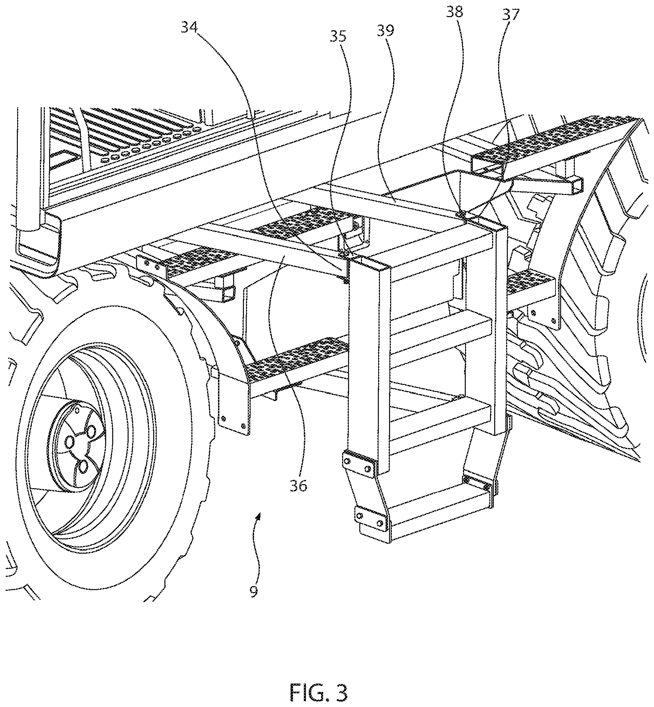

Fig. 3 shows the ascent means 9 in a position whereby the ladder means 10 is located in a position between the first and the second positions. In this context, the first position can be a position into which the ladder means 10 is pivoted during operation and/or while the construction machine 1 is being driven. The ladder means 10 can thus be placed in a first position such that the driver is able to reach the driver's station 5 via the ladder means 10 and the footboard arrangements 11. In addition, the driver can preferably reach, for example, the motor of the construction machine 1 via the ladder means 10 and the rear footboard arrangements 12. The first position can in this case be the position into which the ladder means 10 is pivoted when the driver wishes to ascend to the driver's station 5.

A left front pivot hinge 35 can be arranged to the rear 34 of the upper end of the left ladder side rail 24. The pivot axis of the left front pivot hinge 35 can be vertical, thus enabling a front horizontal pivot strut 36, which can be connected to the ladder means 10 via the left front pivot hinge 35, to be pivoted in a horizontal plane.

A right front pivot hinge 38 can be arranged to the rear 37 of the upper end of the right ladder side rail 25. The pivot axis of the right front pivot hinge 38 can be vertical, thus enabling a rear horizontal pivot strut 39, which can be connected to the ladder means 10 via the right front pivot hinge 38, to be pivoted in a horizontal plane.

The back end of the front horizontal pivot strut 36 can in this case be connected to the undercarriage 3 via a left rear pivot hinge. The back end of the rear horizontal pivot strut 39 can in this case be connected to the undercarriage 3 via a right rear pivot hinge. The back end of the horizontal pivot struts 36 and 39 can thus be situated opposite the front end of the corresponding pivot strut 36 and 39 that is connected to the corresponding front pivot hinge 35, 38. In addition, the rear pivot hinges, which can connect the pivot hinges 36, 39 to the undercarriage, can each feature a vertical pivot axis, thus enabling both pivot struts to be pivoted in a horizontal plane.

Both horizontal pivot struts can be arranged in parallel.

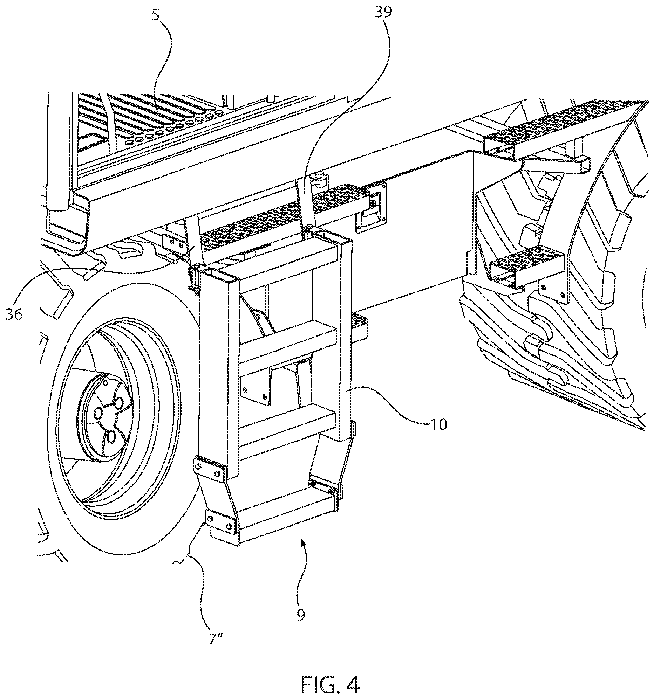

Fig. 4 shows the ascent means 9 in a position whereby the ladder means 10 is located in a second position, in which the ladder means 10 has been placed adjacent to the front wheel 7". Said position can in this case be fixed using abutment means and/or engaging means which define the end point of the motion of one or both horizontal pivot struts 36, 39 and/or the end point of the motion of the ladder means 10. The two pivot struts 36, 39 can in this case be angled with respect to the ladder rungs, the angle being less than 90°, for example approximately 60°. The rungs of the ladder means 10 can thus be horizontal to the substrate upon which the construction machine is standing.

In particular, the ladder means 10 can in this position be located beneath the driver's station 5.

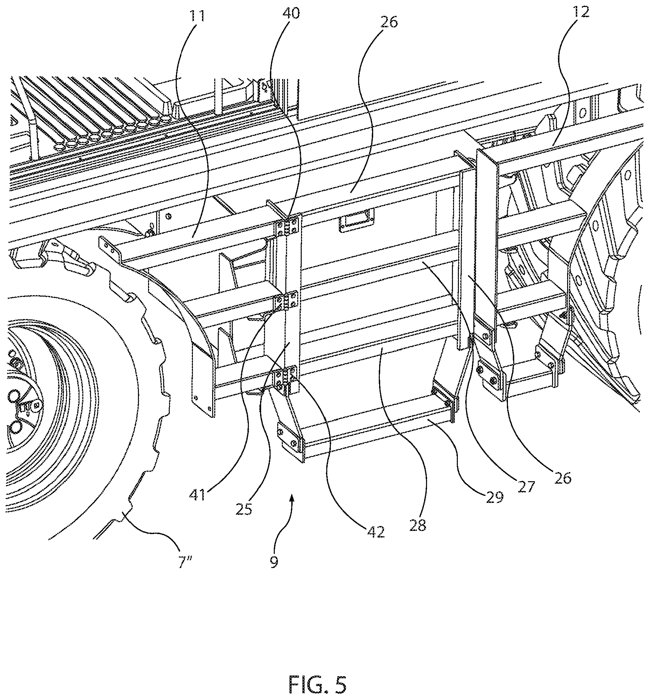

Fig. 5 shows another ascent aid 9 for a construction machine 1. The ascent aid 9 can comprise a ladder side rail 10 having a left 25 and a right 26 ladder side rail. The two ladder side rails 25, 26 can be connected to one another via vertical ladder rungs 26, 27, 28, 29. An upper pivot hinge 40, a middle pivot hinge 41, and a lower pivot hinge 42 can be arranged on the left ladder side rail 25. The ladder means 10 can be pivotably connected to a front footboard arrangement 11 via the pivot hinges. The pivot hinges can feature a common vertical pivot axis. In the first position, as illustrated in Fig. 5, the ladder means 10 is located between the front footboard arrangement 11 and a rear footboard arrangement 12. A principal plane for the ladder means 10 can thereby be located in a principal plane which is defined by the footboard arrangements 11, 12.

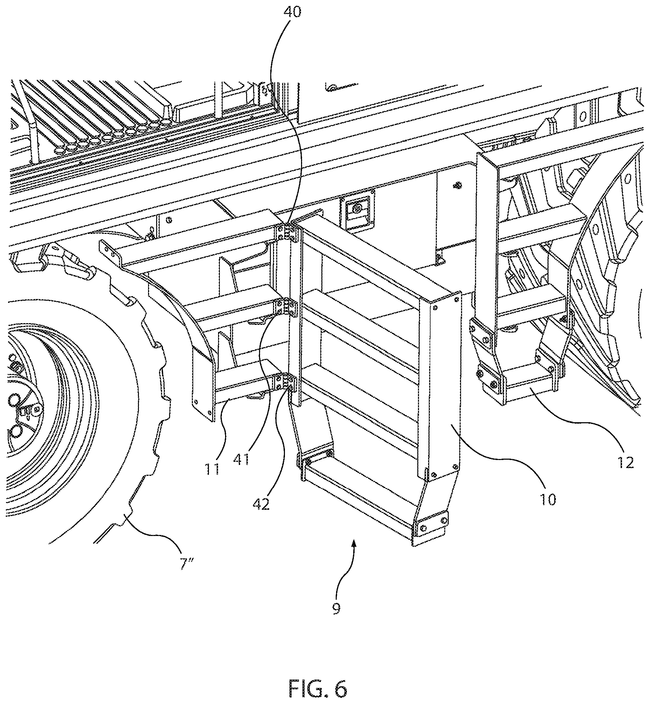

Fig. 6 shows the ascent aid 9 from Fig. 5 in a position between the first position and a second position, whereby the second position can be a position in which the ladder means 10 is located adjacent to the front wheel 7" and beneath the driver's station 5. A principal plane for the ladder means 10 can thereby be situated at an angle to a principal plane which is defined by the footboard arrangements 11, 12. The ladder means 10 can in this case be connected to the front footboard arrangement 11 via the pivot hinges 40, 41, 42.

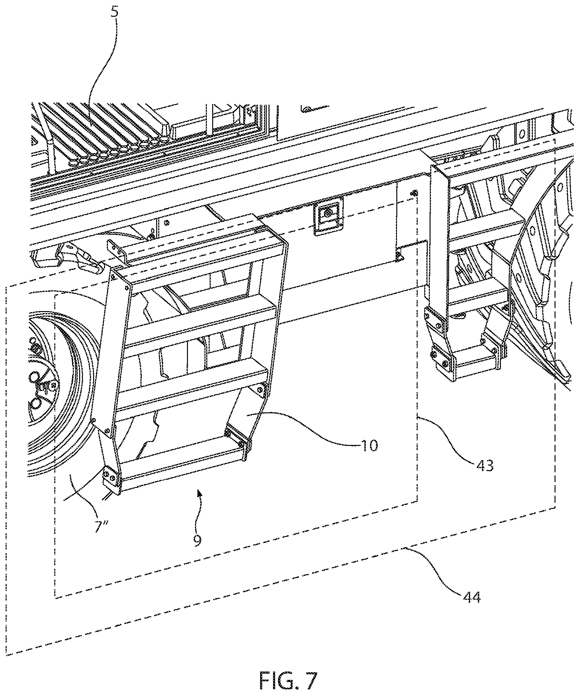

Fig. 7 shows the ascent means 9 from Fig. 5 in a second position, whereby the ladder means 10 is located beneath the driver's station 5 and adjacent to the front wheel 7". The principal plane 43 for the ladder means 10 can in this case be parallel to the principal plane 44 for the two footboard arrangements 11, 12.

### Industrial Applicability

The embodiment according to Fig. 2 can be used as follows:
In a second position, as shown in Fig. 4, the ladder means 10 is located beneath the driver's station 5 and, for example, adjacent to the front tire 7". The ladder means 10 can be held in this position by, for example, engaging means or a drive means. The driver of the construction machine 1 is able to reach the driver's station 5 in this way. In order to stow the ladder means 10 in a first position, the ladder means 10 can, for example, be pivoted with respect to the substructure and opposite to the direction of travel via the pivot struts by means of an electrical or hydraulic drive. A drive of this kind can, for example, be operated from the driver's station. Mechanical actuation methods are also conceivable.

In a first position, in which the ladder means 10 can be arranged between the footboard arrangements 11, 12, the ladder means 10 can likewise be locked in order to prevent undesired pivoting.

## Claims

1. A construction machine (1) comprising an upper carriage (2), an undercarriage (3) and an ascent means (9), wherein the undercarriage (3) features at least one chassis (6), which comprises one front pair of wheels (7) and one rear pair of wheels (8), the upper carriage (2) features a driver's station (5), and
the ascent means (9) comprises a ladder means (10), which ladder means (10) is able to pivot between a first position, in which the ladder means (10) is arranged between the front pair of wheels (9) and the rear pair of wheels (8), and a second position, in which the ladder means (10) is attached to the undercarriage (3) laterally adjacent to the front pair of wheels (9);
wherein the ladder means (10) is connected to the undercarriage (3) via two parallel struts (36, 39) and the struts (36, 39) are both pivotably connected to the undercarriage (3).

2. The construction machine (1) according to claim 1, wherein the ladder means (10) is connected to the undercarriage (3) via at least one laterally arranged pivot hinge (35; 38).

3. The construction machine (1) according to any of the preceding claims wherein, in the first and the second position, a principal plane for the ladder means (10) is situated parallel to a principal axis for the undercarriage (3).

4. The construction machine (1) according to any of the preceding claims, wherein a footboard is arranged at the top of the ladder means (10) and, when the ladder means is placed in the first position, said footboard is arranged horizontally between at least two footboards that are arranged on the undercarriage (3).

5. The construction machine (1) according to any of the preceding claims, wherein the ladder means (10) can be placed between two footboard arrangements.

## Patentansprüche

1. Baumaschine (1), umfassend einen Oberwagen (2), einen Unterwagen (3) und ein Aufstiegsmittel (9), wobei der Unterwagen (3) mindestens ein Chassis (6) aufweist, das ein vorderes Paar Räder (7) und ein hinteres Paar Räder (8) umfasst, wobei der Oberwagen (2) einen Fahrerstand (5) aufweist, und
das Aufstiegsmittel (9) ein Leitermittel (10) umfasst, wobei das Leitermittel (10) zwischen einer ersten Position, in der das Leitermittel (10) zwischen dem vorderen Paar Räder (9) und dem hinteren Paar Räder (8) angeordnet ist, und einer zweiten Position, in der das Leitermittel (10) an dem Unterwagen (3) seitlich angrenzend an dem vorderen Paar Räder (9) angebracht ist, schwenken kann;
wobei das Leitermittel (10) über zwei parallele Streben (36, 39) mit dem Unterwagen (3) verbunden ist und die Streben (36, 39) beide mit dem Unterwagen (3) schwenkbar verbunden sind.

2. Baumaschine (1) nach Anspruch 1, wobei das Leitermittel (10) über mindestens ein seitlich angeordnetes Zapfenband (35; 38) mit dem Unterwagen (3) verbunden ist.

3. Baumaschine (1) nach einem der vorstehenden Ansprüche, wobei in der ersten und der zweiten Position eine Hauptebene für das Leitermittel (10) zu einer Hauptachse für den Unterwagen (3) parallel liegt.

4. Baumaschine (1) nach einem der vorstehenden Ansprüche, wobei ein Fußbrett an der Oberseite des Leitermittels (10) angeordnet ist und, wenn das Leitermittel in der ersten Position platziert ist, das Fußbrett zwischen mindestens zwei Fußbrettern horizontal angeordnet ist, die an dem Unterwagen (3) angeordnet sind.

5. Baumaschine (1) nach einem der vorstehenden Ansprüche, wobei das Leitermittel (10) zwischen zwei Fußbrettanordnungen platziert werden kann.

## Revendications

1. Engin de chantier (1) comprenant une tourelle (2), un train de roulement (3) et un moyen de montée (9), dans lequel le train de roulement (3) comporte au moins un châssis (6), qui comprend une paire de roues avant (7) et une paire de roues arrière (8), la tourelle (2) comporte un poste de conduite (5), et
le moyen de montée (9) comprend un moyen d'échelle (10), lequel moyen d'échelle (10) peut pivoter entre une première position, dans laquelle le moyen d'échelle (10) est agencé entre la paire de roues avant (9) et la paire de roues arrière (8), et une seconde position, dans laquelle le moyen d'échelle (10) est fixé au train de roulement (3), de manière latéralement adjacente à la paire de roues avant (9) ;
dans lequel le moyen d'échelle (10) est relié au train de roulement (3) par l'intermédiaire de deux entretoises parallèles (36, 39) et les entretoises (36, 39) sont toutes deux reliées de manière pivotante au train de roulement (3).

2. Engin de chantier (1) selon la revendication 1, dans lequel le moyen d'échelle (10) est relié au train de roulement (3) par l'intermédiaire d'au moins une charnière pivotante agencée latéralement (35 ; 38).

3. Engin de chantier (1) selon l'une quelconque des revendications précédentes, dans lequel, dans la première et la seconde position, un plan principal pour le moyen d'échelle (10) est situé parallèlement à un axe principal pour le train de roulement (3).

4. Engin de chantier (1) selon l'une quelconque des revendications précédentes, dans lequel un marchepied est agencé au sommet du moyen d'échelle (10) et, lorsque le moyen d'échelle est placé dans la première position, ledit marchepied est agencé horizontalement entre au moins deux marchepieds qui sont agencés sur le train de roulement (3).

5. Engin de chantier (1) selon l'une quelconque des revendications précédentes, dans lequel le moyen d'échelle (10) peut être placé entre deux agencements de marchepieds.
